# FASCICULE DE BREVET EUROPEEN

(11) **EP 2 122 720 B1**
(45) Date de publication et mention de la délivrance du brevet: **12.06.2013**
(21) Numéro de dépôt: 08775582.3
(22) Date de dépôt: 21.02.2008
(51) Int. Cl.: H01M 4/38, H01M 4/40, H01M 10/05, H01M 4/02

(54) **NOUVEAUX MATERIAUX COMPRENANT DES ELEMENTS DU GROUPE 14**
NEUARTIGE MATERIALIEN MIT ELEMENTEN DER GRUPPE 14
NOVEL MATERIALS INCLUDING ELEMENTS OF GROUP 14

(30) Priorité: 22.02.2007 FR 0701282
(43) Date de publication de la demande: 25.11.2009
(73) Titulaire: Centre National de la Recherche Scientifique - CNRS, 75794 Paris Cedex 16 (FR); Université Montpellier 2, 34095 Montpellier Cedex 5 (FR)
(72) Inventeur: ZITOUN, David, 52900 Ramat Gan (IL); BELIN, Claude, F-3400 Montpellier (FR); TILLARD, Monique, F-34070 Montpellier (FR); LACROIX-ORIO, Laurence, F-30000 Nimes (FR); PELOSI, Mathilde, 30340 SALINDRES (FR)
(74) Mandataire: Novagraaf Technologies
(86) Numéro de dépôt international: PCT/FR2008/000226
(87) Numéro de publication internationale: WO 2008/122711

(56) Documents cités:
- WO-A-2004/025757
- WO-A-2006/073427
- JP-A- 61 013 570
- US-A- 5 536 600
- US-A- 5 599 403
- US-A1- 2003 034 486
- US-A1- 2003 134 198
- D. G. KEVORKOV ET AL.: POLISH J. CHEM., vol. 71, 1997, pages 712-715, XP009093811 cité dans la demande
- H. PAULY ET AL.: ZEITSCHRIFT FÜR METALLKUNDE, vol. 59, no. 1, 1968, pages 47-58, XP009093815 cité dans la demande

## Description

### Domaine technique

La présente invention se rapporte au procédé de préparation d'un matériau comprenant au moins un élément du groupe 14, par dégradation thermique d'une phase ternaire connue également comme phase de Zintl ou par réaction de celle-ci avec un solvant oxydant.

Elle concerne également le matériau comprenant au moins un élément du groupe 14, susceptible d'être obtenu par ce procédé et son utilisation principalement dans le domaine de l'électrochimie, notamment le domaine des batteries. Ledit matériau convient plus particulièrement dans le domaine des batteries de type métal alcalin et/ou alcalino-terreux-ions, et en particulier de type lithium-ion.

L'invention concerne, en outre, une anode à base d'un matériau tel que défini.

Le procédé de l'invention permet d'obtenir un matériau avec une capacité massique optimale pouvant stocker et restituer, de manière réversible, un métal alcalin et/ou alcalino-terreux. Ceci rend un tel matériau particulièrement adapté pour une utilisation dans le domaine de l'électrochimie.

Les matériaux susceptibles d'être obtenus selon le procédé de l'invention peuvent, en outre, être adaptés pour une utilisation dans les domaines du photovoltaïque et de la thermoélectricité.

### État de la technique

Les batteries rechargeables de type lithium-ion sont très utilisées dans de nombreux appareils électroniques. La plupart de ces batteries comportent des anodes qui sont constituées de matériaux à base de graphite. Ces matériaux, sont capables d'incorporer le lithium par un mécanisme d'intercalation lors de la recharge de la batterie. Les anodes à base de graphite possèdent en général une bonne cyclabilité et une bonne efficacité coulombienne. Toutefois, la quantité de lithium incorporée par unité de masse du matériau à base de graphite est relativement faible, de l'ordre de 300-400 mAh/g.

Un autre type de matériau utilisé dans la constitution des anodes inclut des métaux capables d'incorporer du lithium par un mécanisme impliquant la formation d'un alliage (mécanisme de conversion) pendant la recharge de la batterie. Ce type de matériau est par exemple décrit dans le document US 5 536 600. Bien que ces types d'anodes permettent une incorporation plus importante de lithium par unité de masse en comparaison avec les anodes à base de graphite, la cyclabilité et l'efficacité coulombienne des ces anodes sont faibles.

En outre, les anodes précitées ont tendance à subir un changement de volume important pendant le processus de lithiation et délithiation. Ce changement de volume peut entraîner la détérioration du contact mécanique et électrique entre les éléments actifs du matériau constitutant l'anode, à savoir, les particules de diluent conducteur (e.g. carbone) et le liant. La détérioration du contact mécanique électrique peut diminuer totalement ou en partie la capacité d'insertion de lithium (la quantité de lithium pouvant être inséré par unité de masse) dans le matériau de l'anode active et la cyclabilité de celle-ci.

Ainsi, il subsiste un besoin réel pour développer un procédé permettant d'obtenir un matériau possédant à la fois une capacité massique optimale et une bonne cyclabilité.

De plus, il existe un réel besoin de disposer d'un procédé qui permet d'obtenir un matériau capable de stocker et restituer, de manière réversible, un métal alcalin et/ou alcalino-terreux sans un changement important de volume.

En outre, il existe un besoin réel de disposer de procédé permettant de préparer un matériau adapté pour une utilisation répétée dans les batteries et en particulier dans les anodes de batterie lithium-ion.

### Description de l'invention

Le procédé de l'invention permet d'obtenir, par des méthodes relativement simples et peu onéreuses, des matériaux présentant une très bonne capacité massique réversible lors de l'insertion d'un métal alcalin et/ou alcalino-terreux et en particulier du lithium et ce, sans aucun traitement électrochimique. Le procédé conduit à un matériau utilisable sans aucune autre étape post-synthétique. En effet, le matériau élaboré permet de pallier à la fatigue mécanique au cours de l'insertion du métal alcalin et/ou alcalino-terreux et en particulier du lithium, fatigue due à une forte variation volumique.

En effet, la présente invention a précisément pour but de répondre aux besoins et inconvénients de l'art antérieur en fournissant un procédé de préparation d'un matériau comprenant au moins un élément du groupe 14 comprenant les étapes suivantes :
- à partir d'un matériau de formule (I) :

   AxGyMz

   dans lequel :
   - A représente au moins un métal alcalin ou alcalino-terreux, notamment choisi parmi lithium, sodium, potassium, rubidium, magnésium et calcium,
   - x représente un nombre entier allant de 1 à 20, notamment de 2 à 15, et en particulier de 3 à 12, voire de 4 à 10,
   - G représente au moins un élément du groupe 14 de la classification périodique des éléments, notamment choisi parmi silicium, germanium, étain et plomb,
   - y représente un nombre entier allant de 1 à 17, notamment de 1 à 10, en particulier de 1 à 6, voire de 1 à 4,
   - M représente au moins un métal noble ou semi-noble, notamment parmi aluminium, cobalt, nickel, cuivre, zinc et argent, et
   - z représente 0 ou un nombre entier allant de 1 à 5, notamment de 1 à 3, voire de 1 à 2,
- extraire, au moins en partie, A du composé de départ par dégradation thermique sous vide, ou par réaction avec un solvant oxydant, étant entendu que lorsqu'il s'agit d'une dégradation thermique sous vide z est différent de 0, et
- récupérer du matériau appauvri en ou dépourvu de A.

Dans le cadre de la présente invention, on entend par métaux nobles ou semi nobles, un métal de transition ou post-transitionnel choisi plus particulièrement dans les groupes 9, 10, 11, 12 et 13 de la classification périodique des éléments.

Le matériau AxGyMz de formule (I) peut être appelé phase ternaire ou phase de Zintl.

Selon un mode de réalisation particulier, dans le matériau de formule (I), G peut être un mélange de deux éléments du groupe 14 de la classification périodique des éléments. Dans ce mode de réalisation, G peut être un mélange de silicium et d'étain. Toujours selon ce même mode de réalisation, un matériau particulièrement intéressant peut-être un matériau dans lequel A est du lithium, et G est un mélange de silicium et d'étain.

Lorsque le matériau récupéré est dépourvu de A, cela signifiera que le procédé de l'invention a permis d'extraire la totalité de A présent dans le matériau de départ.

Lorsqu'il s'agit de matériau appauvri en A, on entend un matériau de formule (IV)

Ax'GyMz

dans lequel
- A, G et M sont tels que défini précédemment,
- y et z sont tels définis précédemment, et
- x' est un nombre inférieur à y/10.

Le matériau récupéré peut avantageusement se présenter sous la forme de nanoparticules. Lesdites particules peuvent avoir une géométrie sphérique ou allongée ou un mélange de sphérique et d'allongée. Pour une géométrie sphérique, le diamètre des particules peut aller de 2 à 100 nm. Pour une géométrie allongée le diamètre peut aller de 2 à 20 nm et la longueur de 5 à 10000 nm.

Par « géométrie allongée », on entend une forme géométrique non sphérique, en particulier une forme de type filaire ou sensiblement filaire, comprenant une longueur supérieure au diamètre. La géométrie et les dimensions des particules peuvent être déduite de l'observation directe par microscopie électronique.

Selon un premier mode de réalisation, le procédé de préparation d'un matériau comprenant au moins un élément du groupe 14 comprend au moins une étape de dégradation thermique sous vide d'un matériau de formule (II) :

AxGyMz

dans laquelle :
- A représente un métal alcalin, notamment choisi parmi lithium, sodium et potassium,
- x représente un nombre entier allant de 1 à 20, notamment de 2 à 15, et en particulier de 3 à 12, voire de 4 à 10,
- G représente le silicium,
- y représente un nombre entier allant de 1 à 10, en particulier de 1 à 6, voire de 1 à 4
- M représente un métal noble ou semi-noble, notamment choisi parmi aluminium, cobalt, nickel, cuivre, zinc, argent, et
- z représente un nombre entier allant de 1 à 5, notamment de 1 à 3, voire de 1 à 2.

Ce procédé peut être appelé « procédé de dégradation thermique » ou « procédé solide ».

Dans ce mode de réalisation, le matériau récupéré peut être dépourvu de A, c'est-à-dire que le procédé de l'invention a permis d'extraire la totalité de A présent dans le matériau de formule (II).

Ledit matériau peut également être appauvri en A, ledit matériau étant de formule (IV)

Ax'GyMz

dans lequel
- A, G et M sont tels que définis précédemment,
- y et z sont tels définis précédemment, et
- x' est un nombre inférieur à y/10.

Ce procédé permet d'obtenir une phase contenant du silicium et au moins un métal noble ou semi-noble présentant une bonne capacité massique.

Par capacité massique on entend la quantité d'électrons pouvant être stockés par unité de masse. Au sens de l'invention, une bonne capacité massique, est une capacité massique supérieure au graphite et en particulier supérieure à 400 mAh/g voire 500 mAh/g.

Comme indiqué, le procédé de dégradation thermique peut permettre d'extraire en tout ou en partie le métal alcalin ou alcalino-terreux, de la phase ternaire de départ. Une analyse par diffraction des rayons X sur le matériau récupéré permet d'y identifier la présence de deux phases des éléments G et M, la largeur des raies permet de définir une taille de nanoparticules inférieure à 200 nm. Une observation par microscopie électronique (balayage et/ou transmission) couplée à de l'analyse chimique permet de définir une structure particulière au procédé : les particules de M sont dispersées de manière homogène dans une matrice de particules de G. Les particules de G et de M ayant des tailles nanométriques, en particulier allant de 1 à 200 nm, notamment de 2 à 100 nm, en particulier de 2 à 80 nm.

Pour procéder à la dégradation thermique, la phase ternaire de départ peut se présenter sous forme d'une poudre, et en particulier sous la forme de particules de petite taille. Cette poudre peut tout particulièrement être obtenue par broyage dans un mortier de la phase ternaire

Dans le procédé selon l'invention, la dégradation thermique peut s'effectuer à haute température en particulier à une température supérieure ou égale à 500°C, notamment supérieure ou égale à 600°C, voire supérieure ou égale à 650°C. La dégradation thermique peut s'effectuer de préférence à une température de 500 à 750°C, et plus préférentiellement à 650°C. Lorsque A est du lithium, la température est avantageusement supérieure ou égale à 650°C.

Cette dégradation thermique peut s'effectuer sur une durée de plusieurs heures, en particulier sur une durée allant de 10 à 30 heures, notamment de 15 à 25 heures, et en particulier de 18 à 24 heures.

Le procédé de dégradation thermique peut être effectué « sous vide », c'est-à-dire sous une pression réduite, notamment une pression inférieure ou égale à 10⁻² Pa , en particulier inférieure ou égale à 10⁻³ Pa, et tout particulièrement inférieure ou égale 10⁻⁴ Pa. De préférence la dégradation thermique peut s'effecter à une pression de 10⁻⁶ à 10⁻² Pa, et plus préférentiellement de 10⁻⁵ à 10⁻³ Pa.

Bien entendu, ces paramètres peuvent être optimisés par l'homme du métier, notamment en fonction de la phase ternaire de départ, en particulier de la nature de l'élément A et/ou de l'application visée, par exemple pour les batteries lithium-ion.

Par exemple, une observation au microscope d'un matériau à base d'argent, de silicium et de lithium de formule et de stoechiométrie conformes au matériau de formule (IV) montrant une poudre noire et des amas métalliques argentés, une analyse par diffraction des rayons X montrant des raies fines correspondant à l'argent démontrant la présence de nanoparticules de taille supérieure à 50 nm, peut amener l'homme du métier à déduire que les conditions de la dégradation thermique ont été trop drastiques, par exemple en terme de durée, de pression et/ou de température. De la même manère, une analyse par diffraction des rayons X peut montrer un reste de métal alcalin et/ou alcalino-terreux dans le matériau récupéré est ainsi conduire l'homme du métier à déduire que les conditions sont trop douces, notamment en terme de durée, de pression et/ou de température.

La dégradation thermique peut être réalisée en présence d'un solvant oxydant. Dans ce procédé, le solvant peut permettre d'extraire en tout ou en partie le métal alcalin ou alcalino-terreux, de la phase ternaire de départ.

Selon un deuxième mode de réalisation, le procédé de préparation d'un matériau comprenant au moins un élément du groupe 14 comprend au moins les étapes suivantes :
- la mise en contact d'un solvant oxydant, avec un matériau de formule (III) :

   AxGyMz

   dans lequel :
   - A représente au moins un métal alcalin ou alcalino-terreux, notamment choisi parmi lithium, sodium, potassium, rubidium, magnésium et calcium,
   - x représente un nombre entier allant de 1 à 12, notamment de 1 à 10, en particulier de 1 à 8,
   - G représente au moins un élément du groupe 14, notamment choisi parmi silicium, germanium, étain et plomb, et
   - y représente un nombre entier allant de 1 à 17, notamment de 1 à 15, en particulier de 1 à 13, voire de 1 à 10, et
   - z est 0
- à récupérer du matériau appauvri en ou dépourvu de A.

Comme indiqué précédemment, lorsque le matériau récupéré est dépourvu de A, cela signifiera que le procédé de l'invention a permis d'extraire la totalité de A présent dans le matériau de départ.

Dans ce deuxième mode de réalisation particulier, le matériau appauvri en A, est un matériau de formule (IV)

Ax'GyMz

dans lequel
- A et G sont tels que définis précédemment,
- y est tel défini précédemment, et
- z est 0
- x' est un nombre inférieur à y/10.

Ce procédé de préparation peut aussi être appelé « procédé liquide ».

Le solvant oxydant peut présenter les deux caractéristiques suivantes:
- porter au moins une fonction oxydante, c'est-à-dire qui permet, par réaction avec un alcalin ou un alcalino-terreux, notamment du type sodium (Na) ou potassium (K), de dégager H₂, cette fonction peut notamment être choisie parmi alcool, amine, thiol, carbonyl, acide carboxylique et acide phosphonique, et
- comprendre au moins un groupement alkyle, aryle ou aralkyles.

Les groupements alkyles, aryles et aralkyles peuvent en particulier être choisis parmi :
- les radicaux alkyles linéaires, ramifiés ou cycliques comme, éthyle, propyle, butyle, pentyle, hexyle, heptyle, octyle, nonyle, décyle, undécyle, dodécyle, tridécyle, tétradécyle, pentadécyle, hexadécyle, octadécyle, nonadécyle, et
- les radicaux aryles et aralkyles, éventuellement substitués une ou plusieurs fois par divers substituants, notamment de type alkyle, lequel alkyle est éventuellement substitués et/ou dont la chaîne peut être interrompue par un ou plusieurs hétéroatomes, notamment du type O, S et N.

Les radicaux aryle et aralkyles peuvent tout particulièrement être choisis parmi les radicaux aromatiques substitués ou non, notamment substitués par au moins un atome d'halogène, un groupement choisi parmi les alkyles, alcools, thiols, amines, acides, éthers, esters, amides, acides, thioéthers, thioesters, ainsi que par des atomes d'halogènes, et en particuler les radicaux aromatiques peuvent être choisis parmi phényles, benzyles, méthoxyphényles, méthoxybenzyles, halophényles, halobenzyles, et tolyles.

Parmi les solvants oxydants, on peut tout particulièrement citer les alcools benzyliques, notamment mono- ou poly-substitués, par exemple par un ou plusieurs radicaux alkyles.

Tout particulièrement, les groupements alkyles, aryles et aralkyles sont suffisamment encombrants pour permettre de stabiliser les nanoparticules.

Dans ce deuxième mode de réalisation, le matériau récupéré peut ensuite être soumis à une étape de traitement thermique ou de recuit. Par le terme recuit, au sens de l'invention, on entend un traitement thermique qui s'effectue à température généralement plus basse que la température à laquelle le matériau a été préparé. Cette étape de traitement thermique peut notamment permettre d'améliorer la cristallinité. Ceci pouvant notamment être observé par diffraction des rayons X.

Le traitement thermique est effectué à haute température, notamment à une température supérieure ou égale à 300°C, en particulier supérieure ou égale à 400°C, voire supérieure ou égale à 500°C. La température du traitement thermique est avantageusement de 200 à 500°C, de 250 à 400°C et plus avantageusement encore de 300 à 350°C.

La durée du traitement thermique peut aller d'une demi-heure à 10 heures, en particulier d'une heure à cinq heures, tout particulièrement d'une heure et demi à 3 heures.

L'étape de traitement thermique peut être effectuée sous une atmosphère inerte, en particulier sous vide , sous argon ou sous azote. Dans ce cas particulier, par « sous vide » on entend une pression allant de 10⁻⁶ Pa à 1 Pa et plus particulièrement de 10⁻³ Pa à 1 Pa.

La synthèse de la phase ternaire de départ oui peut être réalisée selon des modes opératoires décrits dans la littérature, en particulier par Schuster et Kevorkov. L'article de Schuster (H.U. Schuster, W. Seelentag, Zeitschrift fur naturforschung, Teil B: anorganische chemie, organische chemie, 30B (1975) 804) décrit un système ternaire Li₈Ag₃Si₅. Kevorkov (D.G. Kevorkov, V.V. Pavlyuk, O.I. Bodak, Polish Journal of Chemistry, 71(6)(1997) 712) pour sa part décrit Li₈Ag₃Si₅, Li₃Ag₂Si₃ et Li₂AgSi₂.

Pour la phase de Pauly, il n'y a pas de résolution structurale (la phase est simplement citée). Schuster décrit Li₈Ag₃Si₅ comme isostructurale de Li₈Ag₃Ge₅. Pour les composés de Kevorkov, les structures ont été résolues par la méthode de rietveld (paramètres de maille + structure cristalline) à partir de poudre. La synthèse a été réalisée sous vide dans des ampoules de quartz à 200°C pendant 400h.

La phase ternaire peut tout particulièrement être préparée par traitement thermique, en particulier comme décrit dans la littérature par H. Pauly, A. Weiss, H. Witte, Z. Metallkde, 59(1) (1968) 47.

La préparation du matériau de formule (II), ou phase ternaire, peut comprendre au moins une étape de chauffage d'un mélange de poudres comprenant :
- au moins un métal alcalin, notamment choisi parmi lithium, sodium et potassium,
- du silicium,
- au moins un métal noble ou semi-noble, notamment choisi parmi aluminium, cobalt, nickel, cuivre, zinc, argent.

Ces éléments peuvent présenter un pureté supérieure ou égale à 95 %, notamment supérieure ou égale à 98 %, en particulier supérieure ou égale à 99 %, et tout particulièrement supérieure ou égale à 99,5 % en poids.

La quantité de chaque élément peut être déterminée par rapport à la teneur de celui-ci dans le mélange ternaire final. En particulier, les quantités sont estimées de manière stoechiométrique. Plus précisément, en première approche, les quantités sont estimées par rapport à la stoechiométrie du composé envisagé, avec éventuellement un excès du composant alcalin, puis ces proportions sont affinées par des essais de type « essais et erreurs ».

L'augmentation de température, notamment pour aller de la température ambiante, qui est de 20 ± 10°C, à la température dans l'étape de chauffage peut se faire à une vitesse allant de 20 à 500°C/h, en particulier de 50 à 200°C/h, voire de 80 à 150°C/h, tout particulièrement être de 100°C/h.

Le chauffage est effectué à une température élevée pour permettre un mélange intime des éléments. La température est déterminée en prenant en compte le risque de perte d'élément A par évaporation et la nécessité que A soit présent sous forme liquide. La température peut donc être ajustée entre le point de fusion et d'ébullition de l'élément A, notamment supérieure ou égale à 600°C, en particulier supérieure ou égale à 750°C, et tout particulièrement supérieure ou égale à 850°C, notamment dans le cas où A est du lithium.

La durée de ce chauffage peut être de quelques heures, en particulier aller de 1 à 10 heures, notamment de 2 à 8 heures, voire de 4 à 6 heures.

Tout particulièrement, le mélange est agité durant la phase de chauffage. En particulier il est agité de 1 à 20 fois durant cette phase.

Le mélange peut subir une étape de recuit, en particulier consécutive à l'étape de chauffage. Cette étape peut être effectuée à une température inférieure à celle de l'étape de chauffage. La température de l'étape de recuit peut être inférieure de 100 à 400°C, notamment inférieure de 150 à 350°C, en particulier inférieure de 200 à 300°C par rapport à la température de chauffage.

La température de l'étape de recuit peut aller de 500 à 850°C, notamment de 550 à 800°C, en particulier de 600 à 750°C.

La l'étape de recuit peut durer quelques heures, en particulier de 3 à 30 heures, notamment de 5 à 25 heures, voire de 7 à 20 heures, tout particulièrement de 8 à 12 heures.

Lorsque les températures diminuent, en particulier entre l'étape de chauffage et l'étape de recuit, et/ou entre l'étape de recuit et la température ambiante, qui est de 20 ± 10°C, cette descente en température peut se faire à une vitesse allant de 1 à 20°C/h, en particulier de 4 à 16°C/h, voire de 8 à 12°C/h.

Le matériau obtenu peut être récupéré sous atmosphère inerte par ouverture du tube et la poudre est transférée dans le réacteur pour l'étape de dégradation thermique.

Le matériau peut être utilisé dans le procédé de préparation de l'invention tel quel sans autre traitement.

Le procédé de préparation d'un matériau comprenant au moins un élément du groupe 14 selon l'invention permet de contrôler la taille et/ou la cristallinité du matériau obtenu, en particulier la nature des plans cristallins des facettes des nanoparticules. La taille et/ou la cristallinité des nanoparticules peut permettre d'obtenir un matériau avec des propriétés intéressantes.

Avantageusement, le matériau obtenu est sous forme de nanoparticules amorphes. Ceci peut notamment permettre une bonne insertion de métal alcalin et/ou alcalino-terreux dans lesdites nanoparticules.

L'invention concerne également un matériau susceptible d'être obtenu par un procédé selon l'invention.

L'invention concerne encore un matériau comprenant au moins un élément du groupe 14 susceptible d'être obtenu par un procédé selon l'invention permettant l'insertion, au moins en partie réversible, d'au moins un élément de type métal alcalin ou alcalino-terreux.

Tout particulièrement, ce matériau présente une capacité massique supérieure ou égale à 800 mA.h.g⁻¹, notamment supérieure ou égale à 1000 mA.h.g⁻¹, en particulier supérieure ou égale à 1200 mA.h.g⁻¹, voire supérieure ou égale à 1400 mA.h.g⁻¹. Comme indiqué précédemment, la capacité massique signifie la quantité d'électrons stockés par unité de masse.

Au cours du cycle électrochimique, on note également la présence du matériau à base de lithium, typiquement LiAg, qui améliore la conductivité électronique et ionique du matériau.

Tout particulièrement, le matériau comprenant au moins un élément du groupe 14 susceptible d'être obtenu par le procédé de dégradation thermique présente au moins deux phases, chacune pouvant correspondre à un élément à l'état élémentaire ou de corps pur, notamment au moins un métal de transition ou post-transitionnel et le silicium.

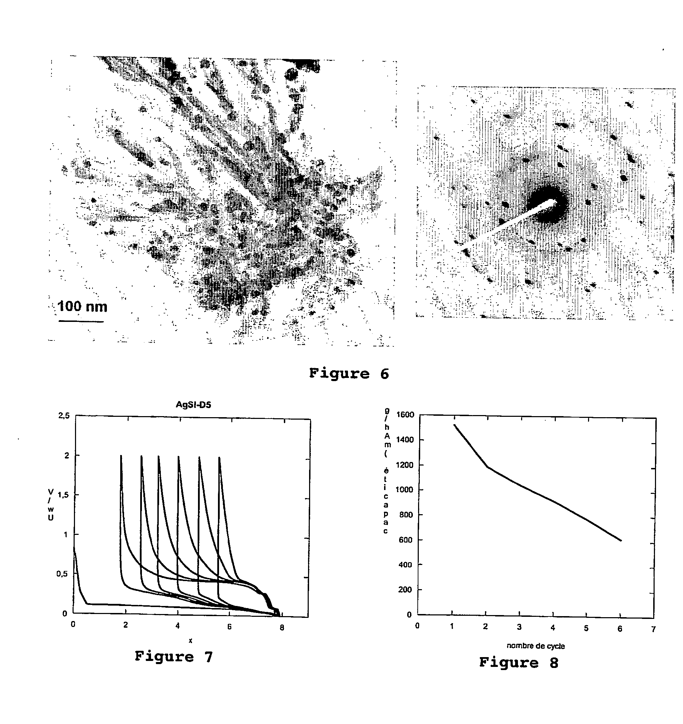

Le matériau obtenu selon le procédé de l'invention peut tout particulièrement se présenter sous la forme de nanoparticules de G et/ou de M pur, notamment comme représenté en figure 6.

On entend par «nanoparticule pure » au sens de la présente invention, une nanoparticule comprenant au moins 98 %, notamment au moins 99%, en particulier au moins 99,9 % en poids du composé dans les nanoparticules.

Ce matériau peut se présenter sous la forme d'une dispersion de nanoparticules de G ou de M, en particulier de taille homogène, dispersées dans une matrice de M ou de G, tout particulièrement des nanoparticules de M dans une matrice de G ou des nanoparticules de G dans une matrice de M.

Tout particulièrement, ce matériau peut se présenter sous ia forme d'une matrice nanocristalline, notamment avec des grains d'une taille allant de 2 à 100 nm de G, et notamment de silicium. En particulier, le G est cristallisé selon une forme thermodynamiquement stable et/ou le métal M sous forme de nanoparticules, en particulier d'une taille allant de 2 à 50 nm.

Par rapport à un matériau obtenu par broyage ou mécanosynthèse, nous remarquons une très bonne homogénéité de la dispersion des nanoparticules M dans la matrice de G, et en particulier de silicium, dans le matériau obtenu selon le procédé l'invention.

Tout particulièrement, le matériau comprenant au moins un élément du groupe 14 obtenu selon le procédé de l'invention peut être utilisé dans une batterie, notamment de type lithium-ion. En particulier en tant que constituant de l'anode, seul ou en combinaison avec d'autres composants.

Dans le cas des matériaux sous forme de nanoparticules, les anodes peuvent être réalisées par simple dépôt ou compression de ces nanoparticules par des techniques de presses ou de type SPS (« Spark Plasma Sintering »).

Le matériau obtenu selon le procédé de l'invention, en particulier quand il est obtenu par une dégradation thermique sous vide, peut présenter des structures de deux phases nanocristallines (G et M), en particulier intimement imbriquées avec une grande interface entre les deux phases, comme le montre la figure 6.

Le matériau obtenu selon le procédé de l'invention, en particulier quand il est obtenu par réaction avec un solvant oxydant, peut se présenter sous forme de nanoparticules présentant une surface non-oxydée, c'est à dire que cette surface est sensiblement non oxydée, voire totalement non oxydée, d'après les techniques d'analyse de surface classique.

Dans les deux cas, les nanoparticules présentent en particulier une longueur de cohérence cristalline (taille de cristallite) inférieure ou égale à 5 nm, en particulier inférieure ou égale à 4 nm, tout particulièrement inférieure ou égale à 3 nm, voire inférieure ou égale à 2,5 nm.

Ces nanoparticules peuvent présenter une cristallinité remarquable. Une cristallinité remarquable peut être définie par le fait que la taille observée par diffraction des rayons X correspond sensiblement à la taille observée par microscopie électronique en transmission. Par « sensiblement » on peut notamment entendre une différence inférieure ou égale à 25 %, notamment inférieure ou égale à 15 %, en particulier inférieure ou égale à 10 %, tout particulièrement inférieure ou égale à 7,5 %, voire inférieure ou égale à 5 %.

Le fait que la forme de ces nanoparticules puisse être contrôlée peut également permettre de moduler les propriétés électroniques.

L'invention concerne également l'utilisation du matériau comprenant au moins un élément du groupe 14 sucseptible d'être obtenu par le procédé de l'invention dans le domaine de l'électrochimie.

Selon un autre de ses aspects, l'invention a encore pour objet une batterie comprenant un matériau comprenant au moins un élément du groupe 14 susceptible d'être obtenu selon le procédé de l'invention.

L'invention concerne, en outre, une anode à base d'un matériau comprenant au moins un élément du groupe 14 susceptible d'être obtenu selon le procédé de l'invention.

Selon un autre de ses aspects, l'invention a encore pour objet l'utilisation d'un matériau comprenant au moins un élément du groupe 14 susceptible d'être obtenu selon le procédé de l'invention pour stocker et restituer, de manière réversible, au moins un métal alcalin et/ou alcalino-terreux. Ce stockage et/ou restitution reversible d'au moins un métal alcalin et/ou alcalino-terreux peut être partiel ou total. Le métal alcalin est avantageusement du lithium.

D'autres avantages pourront encore apparaître à l'homme du métier à la lecture des exemples ci-dessous, illustrés par les figures annexées, donnés à titre illustratif.

### Brève description des figures

- La figure 1 représente un exemple de profil thermique d'un procédé de fabrication d'une phase ternaire.
- La figure 2 représente un diffractogramme des rayons X du composé Li₁₃Ag₅Si₆ affiné selon la méthode de Rietveld.
- La figure 3 représente un exemple de montage expérimental fixé sur rampe à vide pour effectuer les dégradations thermiques (1 branchement sur rampe ; 2 robinet ; 3 joint torique ; 4 refroidisseur ; 5 tube d'alumine ; 6 contre tube inox ; 7 tube de silice).
- La figure 4 représente l'évolution des diffractogrammes des rayons X sur poudre des différentes dégradations présentés dans le Tableau 1 de l'exemple 1.
- La figure 5 représente un diffractogramme des rayons X sur une poudre du produit obtenu après dégradation thermique sous vide de Li₁₃Ag₅Si₆ indexé avec Ag et Si.
- La figure 6 représente un micrographe MET et figure de diffraction électronique du produit de dégradation de Li₁₃Ag₅Si₆.
- La figure 7 représente un cyclage en mode galvanostatique de la batterie Li/LiₓAgSi.
- La figure 8 représente une courbe de cyclabilité associée au cyclage décrit en figure 7.
- La figure 9 représente un cyclage en mode potentiodynamique de la batterie Li/LᵢₓAgSi - 1^{er} cycle.
- La figure 10 représente un cyclage en mode potentiodynamique de la batterie Li/LiₓAgSi - 2^{ème} cycle.
- La figure 11 représente un micrographe MET de nanoparticules de Germanium obtenues à 20°C par action de l'alcool benzylique.
- La figure 12 représente une diffraction des rayons X des nanoparticules de Germanium obtenues à 20°C par action de l'alcool benzylique sur le composé K₄Ge₉ (Haut : après synthèse ; bas après recuit).
- La figure 13 représente des nanocristaux de Germanium obtenus à 20°C par action de 1-butanol sur le composé K₄Ge₉ après traitement à l'éthylène diamine.
- La figure 14 représente des nanofils de Silicium en oignons, obtenus par action de l'alcool benzylique sur le composé K₁₂Si₁₇.
- La figure 15 représente des nanofils de Silicium auto-organisés obtenus selon le même procédé que celui de la figure 14.
- La figure 16 représente un cyclage en mode galvanostatique de la batterie Li / nanoparticules de Germanium figurant à la figure 12.

### EXEMPLES

### Exemple 1 : Préparation de l'alliage Li₁₃Ag₅Si₆

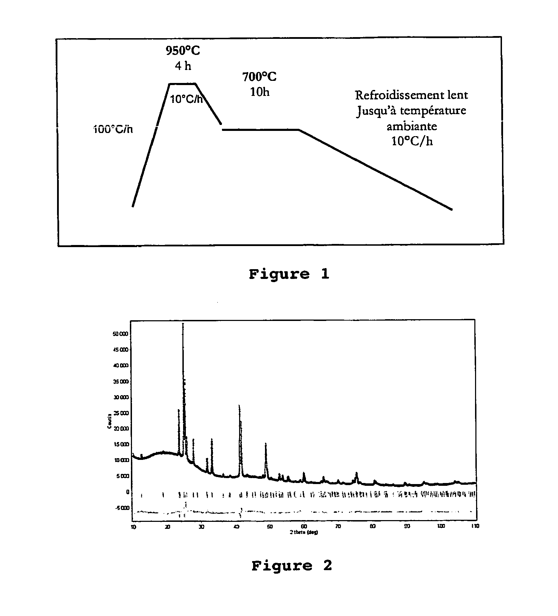

Un mélange de 0,117 g de Lithium (lingot pur à 99,54 %, Cogema), de 0,913 g d'Argent (aiguilles, pur à 99,999 %, Strem Chemicals) et de 0,237 g Silicium (poudre, pur à 99,998 %, Goodfellow) a été inséré dans un réacteur en Tantale scellé par soudage à l'arc, lui-même inséré dans un tube de silice qui est ensuite scellé sous vide. Ce réacteur a ensuite été placé dans un four avec une montée en température de la température ambiante à 950°C à 100°C/h, puis 4 heures à 950°C, refroidissement à 10°C/h jusqu'à 700°C, chauffage à 700°C pendant 10 heures, puis refroidissement jusqu'à température ambiante à une vitesse de 10°C/h. Ce profil thermique est illustré en figure 1.

Une analyse élémentaire semi-quantitative par microsonde (MEB) et une spectrométrie d'absorption atomique d'un cristal isolé de la préparation donnent un composé de stoechiométrie Li₁₃Ag₅Si₆.

Ce composé a été étudié par diffraction des rayons X sur poudre et monocristal. Le diffractogramme de la poudre est représenté en figure 2. Tous les pics sont parfaitement indexés dans la maille Rhomboédrique R-3m de paramètres a = 0,4376 nm et c = 4,2293 nm (axes hexagonaux).

### Exemple 2 : préparation du matériau actif

Le matériau Li₁₃Ag₅Si₆, obtenu après la synthèse, est broyé dans un mortier en agate pour permettre une meilleure extraction de lithium.

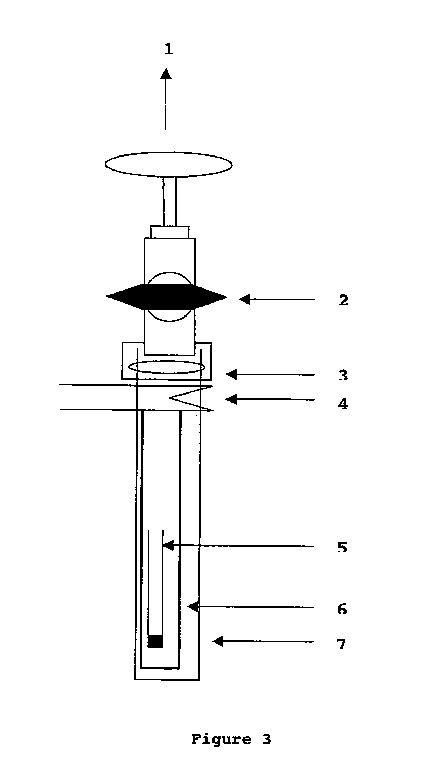

Cette poudre est placée dans un petit tube d'alumine lui-même placé dans un tube d'acier inoxydable, l'ensemble est inséré dans un tube de silice fermé par un robinet. Le tube d'acier inoxydable protège la silice des attaques par les vapeurs de lithium. Le montage est donc constitué de trois tubes : le petit tube d'alumine dans lequel est contenue la poudre, le contre tube en inox et enfin le tube de silice. Un tel montage est illustré par la figure 3.

Le montage est ensuite directement monté sur la rampe à vide. Le vide primaire est d'abord effectué à l'aide d'une pompe à huile, puis un vide secondaire est créé avec une pompe à diffusion munie d'une résistance. Le vide obtenu avec le tube de silice est de l'ordre de 10⁻⁷ mbar. Le tube monté sur la rampe à vide est ensuite glissé dans un four tubulaire horizontal. Un refroidisseur est installé à la sortie du tube d'inox pour permettre la condensation du lithium à la sortie du tube d'alumine.

Les nouvelles conditions de vide ont nécessité différents tests pour permettre d'extraire tout le lithium contenu dans l'échantillon. Des températures variant de 550°C à 650°C ont été testées ainsi que des durées d'extraction allant de 15 à 30 heures.

Les résultats de quatre dégradations avec des conditions de température et de durée différentes sont rassemblés dans le Tableau 1 suivant.

**Tableau 1**

| Dégradation | 1 | 2 | 3 | 4 |
|---|---|---|---|---|
| Température [°C] | 550 | 650 | 650 | 650 |
| Vide [bar] | 10⁻⁶ | 10⁻⁶ | 10⁻⁶ | 10⁻⁶ |
| Durée [H] | 15 | 15 | 24 | 30 |
| Phases détectées par DRX | LiAgSi Ag, autre | Ag, Si LiAgSi | Ag, Si | Ag aggloméré, Si |

Conditions expérimentales des différentes dégradations thermiques pour le composé Li₁₃Ag₅Si₆

La première dégradation a été réalisée à 550°C pendant 15 heures. L'analyse du produit obtenu par diffraction des rayons X sur poudre montre que la phase principale est la phase de départ Li₁₃Ag₅Si₆, en moins grande quantité on observe de l'argent et des impuretés. On peut donc penser que la dégradation thermique de ce composé à 550°C ne permet pas d'extraire le lithium.

Un deuxième test à 650°C pendant 15 heures a été effectué. L'analyse du produit aux rayons X montre que le composé de départ s'est décomposé en corps purs simples argent et silicium, il reste cependant un résidu de la phase de départ.

Pour permettre d'extraire tout le lithium nous avons décidé d'allonger le temps de dégradation à 24 heures. Ce test est concluant et les phases présentes sont l'argent et le silicium.

Pour compléter ces tests nous avons maintenu la température de dégradation à 650°C et étendu la durée d'extraction à 30 heures. Le produit observé sous le microscope montre une poudre noire et des amas métalliques argentés, permettant de déduire que la dégradation de 30 heures est trop longue et provoque une agglomération de l'argent.

Les conditions optimales de dégradation thermique sous un vide de 10⁻⁶ mbar pour le composé Li₁₃Ag₅Si₆ sont une température de 650°C pendant 24 heures.

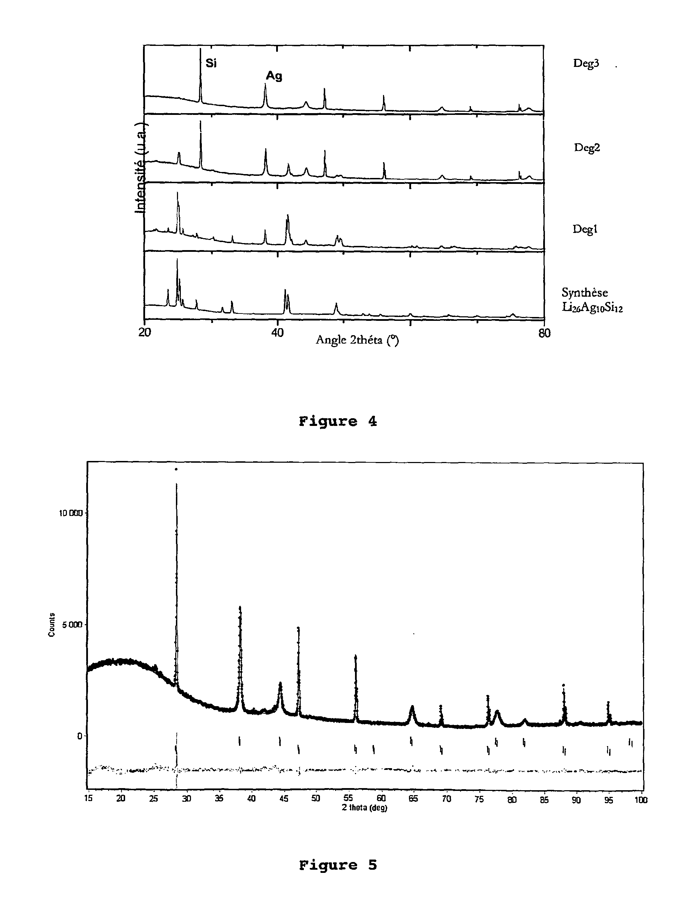

L'évolution des diffractogrammes des rayons X sur poudre des différentes dégradations est représentée sur la Figure 4 dans laquelle « deg 1, 2, 3 et 4 » signifie conditions de dégradation 1, 2, 3 et 4 telles que présentées dans le tableau 1.

On peut voir sur cette figure la disparition progressive de la phase synthétisée Li₁₃Ag₅Si₆ qui disparaît totalement à la dégradation 3. On voit l'apparition des pics de l'argent dès la première dégradation, et enfin l'apparition des pics du silicium à partir de la dégradation 2. Notre but est maintenant d'étudier plus en détail le diagramme de poudre du produit dégradé et de connaître la morphologie des particules d'argent et de silicium obtenues.

Le diffractogramme des rayons X sur poudre du produit obtenu après la dégradation thermique sous vide du composé Li₁₃Ag₅Si₆ montre la présence de deux phases. Ce sont en fait deux éléments à l'état élémentaire, l'argent et le silicium. Ce diffractogramme est présenté en figure 5.

Des micrographes MET du produit de dégradation sont présentés en figure 6.

### Exemple 3 : Utilisation en électrochimie

Les produits dégradés selon la dégradation de l'exemple 2 ont ensuite été testés en électrochimie dans les cellules de type Swagelock. Le régime imposé est de 1 lithium en 10 heures et la fenêtre de potentiel comprise entre 0,01 V et 2 V.

L'insertion de lithium dans la matrice AgSi permet d'atteindre la stoechiométrie Li₈AgSi, après la première charge, on extrait jusqu'à 6 atomes de lithium pour atteindre stoechiométrie Li₂AgSi. La capacité diminue progressivement lors des cycles suivants (figure 7).

La courbe de cyclabilité (figure 8) montre que les capacités obtenues pour les premiers cycles sont très élevées (1500, 1200 mA.h.g⁻¹).

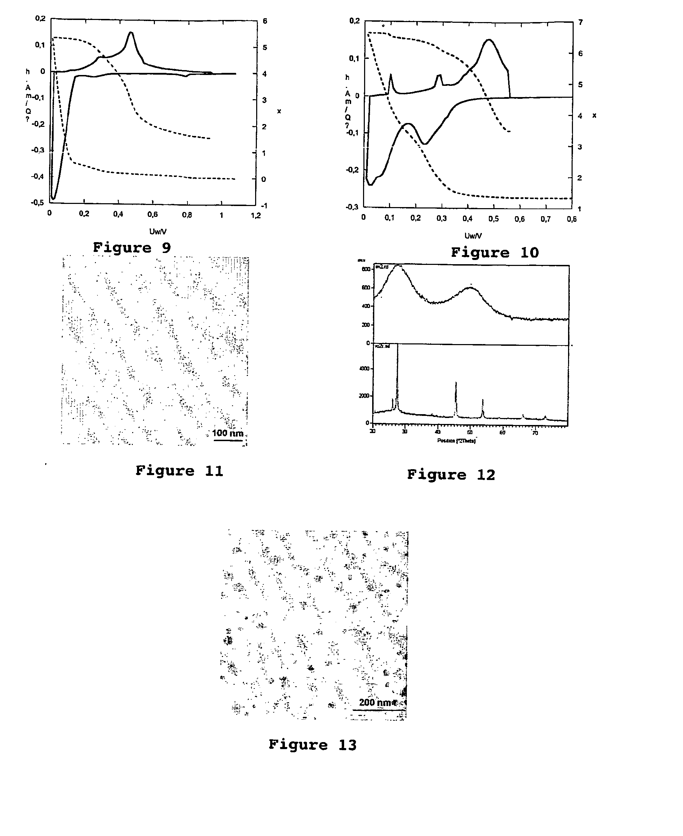

Pour comprendre les mécanismes nous avons représenté sur les figures 9 et 10 les tests en cyclage en mode potentiodynamique.

Pour le premier cycle, lors de la 1^{ère} décharge on observe un pic intense à 0.02 V qui correspond au plateau sur la courbe en mode galvanostatique (changement de phase), il y a ensuite deux petits pics à 0,25 V et 0,78 V (insertion de Li dans le carbone amorphe). Lors de la 1^{ère} charge on observe 3 pics : deux petits à 0,1 V et 0,28 V, un large et intense à 0,45V (phénomène monophasé).

Lors du 2^{éme} cycle, les phénomènes sont reproductibles et les pics sont plus intenses.

### Exemple 4 : Préparation de l'alliage K₄Ge₉

Les alliages sont préparés à partir des éléments pesés en quantité stoechiométrique en boîte à gants. Le potassium (Aldrich 99,5 %, rod, m = 0,630 g) et le germanium (Strem, powder, 99,999%) sont placés dans un tube de tantale scellé à une extrémité dont la deuxième extrémité est ensuite scellée sous argon. Le tube de tantale est protégé de toute oxydation à haute température par un contre tube de silice scellé sous vide. L'ensemble est porté à 730°C pendant 24 heures, puis 930°C pendant 24 heures.

L'alliage obtenu est homogène, de couleur noire avec des reflets rouge et caractérisé par diffraction des rayons X sur poudre (cellule sous cloche d'argon) et stocké en boite à gants. K₄Ge₉ présente un arrangement des atomes du groupe 14 en polyèdres (Ge₉⁴⁻ sous forme de prisme trigonal tricapé).

### Exemple 5 : Procédé de synthèse de nanoparticules de germanium.

L'alliage K₄Ge₉ (100 mg) préparé selon la méthode décrite ci-dessus est introduit en boîte à gants dans un réacteur en verre présentant une sortie de type rotaflo. Sur une rampe à vide, 10 mL d'alcool benzylique préalablement séché sur tamis moléculaire et dégazé à l'argon sont ajoutés au moyen d'une canule. Le mélange est laissé sous agitation pendant deux heures à température ambiante. La solution de couleur noire est ensuite placée dans un tube à centrifuger. Une centrifugation à 4000 tours/minute pendant 20 minutes permet d'obtenir une poudre noire. La caractérisation par diffraction des rayons X et microscopie électronique en transmission permet d'établir la présence de nanoparticules de germanium de diamètre moyen 2,0 +/- 0,2 nm (structure diamant du germanium massif). Ces nanoparticules sont présentées en figure 11 et la diffraction des rayons X de ces particules est représentée en figure 12.

### Exemple 6: utilisation des nanoparticules de germanium comme anode dans une batterie Lithium-ion.

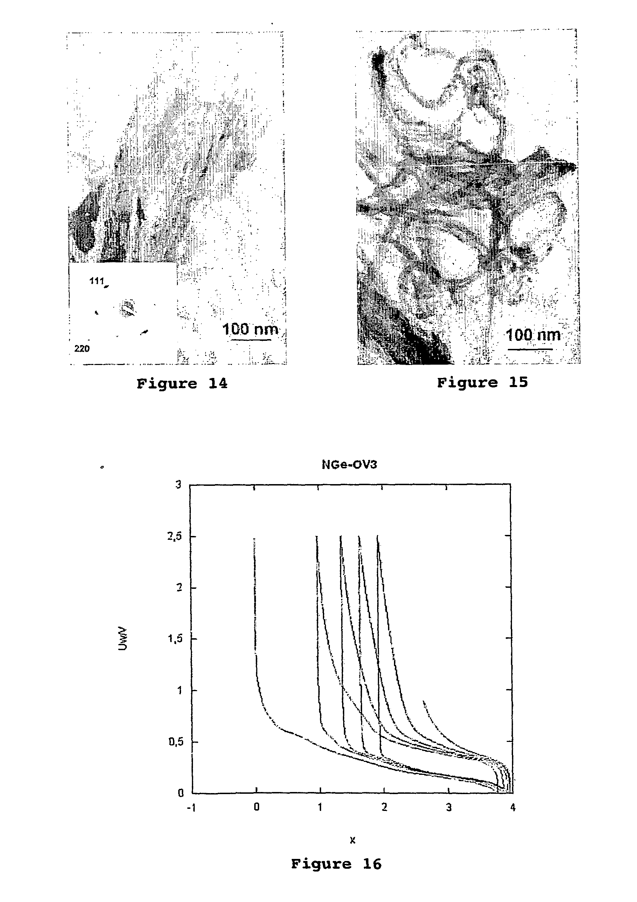

La poudre de nanoparticules de germanium (8,5 mg) est compactée en boîte à gants avec 1,5 mg de graphite pour former une pastille. L'anode est testée en mode galvanostatique à un régime C/10 (1 ion lithium inséré en 10h) entre 0,01 et 2,5V. La courbe électrochimique décharge/charge est présenté sur la figure 16. On peut voir une faible polarisation (différence entre la charge et la décharge) constante pendant le cyclage. Le germanium insère pratiquement 3 ions lithium. Comme l'indique ia figure, une fois la première décharge faite, les cycles sont simplement décalés. Cependant, on observe, au premier cycle, une perte de capacité irréversible de 360 mAh.g⁻¹. La perte de capacité au fur et à mesure du cyclage est relativement importante (environ 100 mAh.g⁻¹), mais diminue entre chaque cycle.

## Revendications

1. Procédé de préparation d'un matériau comprenant au moins un élément du groupe 14 comprenant les étapes suivantes :
➢ à partir d'un matériau de formule (I) :
AxGyMz
dans lequel :
- A représente au moins un métal alcalin ou alcalino-terreux, choisi parmi lithium, sodium, potassium, rubidium, magnésium et calcium,
- x représente un nombre entier allant de 1 à 20,
- G représente au moins un élément du groupe 14 de la classification périodique des éléments, choisi parmi silicium, germanium, étain et plomb,
- y représente un nombre entier allant de 1 à 17,
- M représente au moins un métal noble ou semi-noble, choisi parmi aluminium, cobalt, nickel, cuivre, zinc et argent, et
- z représente 0 ou un nombre entier allant de 1 à 5,
extraire, au moins en partie, A du composé de départ par dégradation thermique sous vide, ou par réaction avec un solvant oxydant, étant entendu que lorsqu'il s'agit d'une dégradation thermique sous vide z est différent de 0, et
➢ récupérer du matériau appauvri en ou dépourvu de A.

2. Procédé de préparation d'un matériau selon la revendication 1, **caractérisé en ce que** dans le matériau de formule (I), G est un mélange de silicium et d'étain.

3. Procédé de préparation d'un matériau comprenant au moins un élément du groupe 14 selon la revendication 1, comprenant au moins une étape de dégradation thermique sous vide d'un composé de formule (II) :
AxGyMz
dans laquelle :
- A représente un métal alcalin, choisi parmi lithium, sodium et potassium,
- x représente un nombre entier allant de 1 à 20,
- G représente le silicium,
- y représente un nombre entier allant de 1 à 10,
- M représente un métal noble ou semi-noble, choisi parmi aluminium, cobalt, nickel, cuivre, zinc, argent, et
- z représente un nombre entier allant de 1 à 5.

4. Procédé de préparation d'un matériau comprenant au moins un élément du groupe 14 selon l'une quelconque des revendications 1 à 3, **caractérisé en ce que** le matériau appauvri en A, est de formule (IV)
Ax'GyMz
dans lequel
- A, G et M sont tels que définis selon l'une des revendications 1 à 3,
- y et z sont tels définis selon l'une des revendications 1 à 3, et
- x' est un nombre inférieur à y/10.

5. Procédé selon l'une quelconque des revendications 1 à 4, **caractérisé en ce que** la pression est inférieure ou égale à 10⁻² Pa.

6. Procédé selon l'une quelconque des revendications 1 à 5, **caractérisé en ce que** la dégradation thermique est effectuée à une température supérieure ou égale à 500°C.

7. Procédé selon l'une quelconque des revendications 1 à 6, **caractérisé en ce que** la dégradation thermique est effectuée sur une durée allant de 10 à 30 heures.

8. Procédé de préparation d'un matériau comprenant au moins un élément du groupe 14 selon la revendication 1, comprenant au moins les étapes suivantes :
➢ la mise en contact d'un solvant oxydant, avec un matériau de formule (III) :
AxGyMz
dans lequel :
- A représente au moins un métal alcalin ou alcalino-terreux, notamment choisi parmi lithium, sodium, potassium, rubidium, magnésium et calcium,
- x représente un nombre entier allant de 1 à 12,
- G représente au moins un élément du groupe 14, choisi parmi silicium, germanium, étain et plomb, et
- y représente un nombre entier allant de 1 à 17, et
- z est 0,
➢ à récupérer du matériau appauvri en ou dépourvu de A.

9. Procédé de préparation d'un matériau comprenant au moins un élément du groupe 14 selon la revendication 8, **caractérisé en ce que** le matériau appauvri en A, est de formule (IV)
Ax'GyMz
dans lequel
- A et G sont tels que défini précédemment,
- y est tel défini précédemment, et
- z est 0,
- x' est un nombre inférieur à y/10.

10. Procédé selon l'une des revendications 8 ou 9, **caractérisé en ce que** le solvant oxydant présente les deux caractéristiques suivantes :
- porter au moins une fonction oxydante choisie parmi alcool, amine, thiol, carbonyl, acide carboxylique et acide phosphonique, et
- comprendre au moins un groupement alkyle, aryle ou aralkyle.

11. Procédé selon la revendication 10, **caractérisé en ce que** les groupements alkyles, aryles et aralkyles sont choisis parmi :
- les radicaux alkyles linéaires, ramifiés ou cycliques comme éthyle, propyle, butyle, pentyle, hexyle, heptyle, octyle, nonyle, décyle, undécyle, dodécyle, tridécyle, tétradécyle, pentadécyle, hexadécyle, octadécyle, nonadécyle, et
- les radicaux aryles et aralkyles, éventuellement substitués une ou plusieurs fois par un alkyle, lequel alkyle est éventuellement substitués et/ou dont la chaîne est interrompue par un ou plusieurs hétéroatomes.

12. Procédé selon l'une quelconque des revendications 8 à 11, caractérisé en ce le matériau de formule (IV)
Ax'GyMz
tel que défini à la revendication 9, est soumis à une étape de traitement thermique.

13. Procédé selon la revendication 12, **caractérisé en ce que** la température du traitement thermique est supérieure ou égale à 300°C.

14. Matériau comprenant au moins un élément du groupe 14 susceptible d'être obtenu par un procédé tel que défini selon l'une quelconque des revendications 1 à 13 et qui est de formule (I\/) A_{x'}G_{y}M_{z} avec A, G, M et y sont tels que définis dans la revendication 1, z représente un nombre entier allant de 1 à 5 et x' est un nombre inférieur à y/10 ou dépourvu de A, ledit matériau étant sous la forme de nanoparticules de G et/ou M pur.

15. Matériau selon la revendication 14, dans lequel ledit matériau se présente sous la forme d'une dispersion de nanoparticules de G ou de M, dispersées dans une matrice de M ou de G ou dans lequel des nanoparticules de M sont dispersées dans une matrice de G ou des nanoparticules de G sont dispersées dans une matrice de M.

16. Matériau selon la revendication 14, se présentant (i) sous la forme d'une matrice nanocristalline avec des grains de G de taille allant de 2 à 100 nm ou (ii) dans lequel le G est cristallisé selon une forme thermodynamiquement stable et/ou les nanoparticules de métal M ont une taille allant de 2 à 50 nm.

17. Utilisation d'un matériau selon la revendication 14 dans le domaine de l'électrochimie.

18. Utilisation d'un matériau selon la revendication 14 dans les domaines du photovoltaïque et de la thermoélectricité.

19. Batterie comprenant un matériau selon la revendication 14.

20. Anode comprenant un matériau selon la revendication 14.

21. Utilisation d'un matériau selon la revendication 14, pour stocker et restituer, de manière réversible, au moins un métal alcalin et/ou alcalino-terreux.

## Patentansprüche

1. Verfahren zur Herstellung eines Materials, das mindestens ein Element der Gruppe 14 umfasst, bei dem man :
➢ aus einem Material der Formel (I):
AxGyMz
worin:
- A für mindestens ein Alkali- oder Erdalkalimetall, das aus Lithium, Natrium, Kalium, Rubidium, Magnesium und Calcium ausgewählt ist, steht,
- x für eine ganze Zahl im Bereich von 1 bis 20 steht,
- G für mindestens ein Element der Gruppe 14 des Periodensystems der Elemente, das unter Silicium, Germanium, Zinn und Blei ausgewählt ist, steht,
- y für eine ganze Zahl im Bereich von 1 bis 17 steht,
- M für mindestens ein Edel- oder Halbedelmetall, das aus Aluminium, Cobalt, Nickel, Kupfer, Zink und Silber ausgewählt ist, steht und
- z für 0 oder eine ganze Zahl im Bereich von 1 bis 5 steht,
durch thermischen Abbau unter Vakuum oder durch Reaktion mit einem oxidierenden Lösungsmittel A der Ausgangsverbindung zumindest teilweise extrahiert, mit der Maßgabe, dass dann, wenn es sich um einen thermischen Abbau unter Vakuum handelt, z von 0 verschieden ist, und
➢ das an A abgereicherte oder von A freie Material gewinnt.

2. Verfahren zur Herstellung eines Materials nach Anspruch 1, **dadurch gekennzeichnet, dass** in dem Material der Formel (I) G eine Mischung von Silicium und Zinn ist.

3. Verfahren zur Herstellung eines Materials, das mindestens ein Element der Gruppe 14 umfasst, nach Anspruch 1, umfassend mindestens einen Schritt des thermischen Abbaus einer Verbindung der Formel (II) :
AxGyMz
worin:
- A für ein Alkalimetall, das aus Lithium, Natrium und Kalium ausgewählt ist, steht,
- x für eine ganze Zahl im Bereich von 1 bis 20 steht,
- G für Silicium steht,
- y für eine ganze Zahl im Bereich von 1 bis 10 steht,
- M für ein Edel- oder Halbedelmetall, das aus Aluminium, Cobalt, Nickel, Kupfer, Zink und Silber ausgewählt ist, steht und
- z für eine ganze Zahl im Bereich von 1 bis 5 steht,
unter Vakuum.

4. Verfahren zur Herstellung eines Materials, das mindestens ein Element der Gruppe 14 umfasst, nach einem der Ansprüche 1 bis 3, **dadurch gekennzeichnet, dass** das an A abgereicherte Material die Formel (IV) aufweist:
Ax'GyMz
worin
- A, G und M die in einem der Ansprüche 1 bis 3 angegebene Bedeutung besitzen,
- y und z die in einem der Ansprüche 1 bis 3 angegebene Bedeutung besitzen und
- x' für eine Zahl kleiner y/10 steht.

5. Verfahren nach einem der Ansprüche 1 bis 4, **dadurch gekennzeichnet, dass** der Druck kleiner gleich 10⁻² Pa ist.

6. Verfahren nach einem der Ansprüche 1 bis 5, **dadurch gekennzeichnet, dass** der thermische Abbau bei der Temperatur größer gleich 500°C durchgeführt wird.

7. Verfahren nach einem der Ansprüche 1 bis 6, **dadurch gekennzeichnet, dass** der thermische Abbau über einen Zeitraum im Bereich von 10 bis 30 Stunden durchgeführt wird.

8. Verfahren zur Herstellung eines Materials, das mindestens ein Element der Gruppe 14 umfasst, nach Anspruch 1, bei dem man mindestens:
➢ ein oxidierendes Lösungsmittel mit einem Material der Formel (III) :
AxGyMz
worin:
- A für mindestens ein Alkali- oder Erdalkalimetall, das insbesondere aus Lithium, Natrium, Kalium, Rubidium, Magnesium und Calcium ausgewählt ist, steht,
- x für eine ganze Zahl im Bereich von 1 bis 12 steht,
- G für mindestens ein Element der Gruppe 14, das aus Silicium, Germanium, Zinn und Blei ausgewählt ist, steht und
- y für eine ganze Zahl im Bereich von 1 bis 17 steht und
- z 0 ist,
in Berührung bringt,
➢ das an A abgereicherte oder von A befreite Material gewinnt.

9. Verfahren zur Herstellung eines Materials, das mindestens ein Element der Gruppe 14 umfasst, nach Anspruch 8, **dadurch gekennzeichnet, dass** das an A abgereicherte Material die Formel (IV) aufweist:
Ax'GyMz
worin
- A und G die oben angegebene Bedeutung besitzen,
- y die oben angegebene Bedeutung besitzt und
- z 0 ist,
- x' für eine Zahl kleiner y/10 steht.

10. Verfahren nach einem der Ansprüche 8 oder 9, **dadurch gekennzeichnet, dass** das oxidierende Lösungsmittel die folgenden beiden Eigenschaften aufweist:
- es trägt mindestens eine oxidierende Funktion, die aus Alkohol, Amin, Thiol, Carbonyl, Carbonsäure und Phosphonsäure ausgewählt ist, und
- es umfasst mindestens eine Alkyl-, Aryl- oder Aralkylgruppe.

11. Verfahren nach Anspruch 10, **dadurch gekennzeichnet, dass** die Alkyl-, Aryl- oder Aralkylgruppen aus:
- linearen, verzweigten oder cyclischen Alkylresten wie Ethyl, Propyl, Butyl, Pentyl, Hexyl, Heptyl, Octyl, Nonyl, Decyl, Undecyl, Dodecyl, Tridecyl, Tetradecyl, Pentadecyl, Hexadecyl, Octadecyl, Nonadecyl, und
- Aryl- und Aralkylresten, die gegebenenfalls ein- oder mehrfach durch ein Alkyl substituiert sind, wobei das Alkyl gegebenenfalls substituiert ist und/oder dessen Kette durch ein oder mehrere Heteroatome unterbrochen ist,
ausgewählt sind.

12. Verfahren nach einem der Ansprüche 8 bis 11, **dadurch gekennzeichnet, dass** das Material der Formel (IV)
Ax'GyMz
gemäß Anspruch 9 einem Wärmebehandlungsschritt unterworfen wird.

13. Verfahren nach Anspruch 12, **dadurch gekennzeichnet, dass** die Temperatur der Wärmebehandlung größer gleich 300°C ist.

14. Material, umfassend mindestens ein Element der Gruppe 14, das durch ein Verfahren gemäß einem der Ansprüche 1 bis 13 erhältlich ist und die Formel (IV) A_{x'}G_{y}M_{z}, wobei A, G, M und y die in Anspruch 1 angegebene Bedeutung besitzen, z für eine ganze Zahl im Bereich von 1 bis 5 steht und x' eine Zahl kleiner y/10 ist, aufweist, oder von A frei ist, wobei das Material in Form von Nanopartikeln aus reinem G und/oder M vorliegt.

15. Material nach Anspruch 14, wobei das Material in Form einer Dispersion von G- oder M-Nanopartikeln, die in einer M- oder G-Matrix dispergiert sind, oder worin M-Nanopartikel in einer G-Matrix dispergiert sind oder G-Nanopartikel in einer M-Matrix dispergiert sind, vorliegt.

16. Material nach Anspruch 14, vorliegend (i) in Form einer nanokristallinen Matrix mit G-Körnern mit einer Größe im Bereich von 2 bis 100 nm oder (ii) worin G in einer thermodynamischen stabilen Form kristallisiert ist und/oder die Nanopartikel aus Metall M eine Größe im Bereich von 2 bis 50 nm aufweisen.

17. Verwendung eines Materials nach Anspruch 14 auf dem Gebiet der Elektrochemie.

18. Verwendung eines Materials nach Anspruch 14 auf den Gebieten der Photovoltaik und der Thermoelektrizität.

19. Batterie, umfassend ein Material nach Anspruch 14.

20. Anode, umfassend ein Material nach Anspruch 14.

21. Verwendung eines Materials nach Anspruch 14 zum reversiblen Speichern und Wiederabgeben mindestens eines Alkali- und/oder Erdalkalimetalls.

## Claims

1. Method for preparing a material comprising at least one element of group 14, comprising the following steps :
➢ from a material of formula (I) :
AxGyMz
in which:
- A represents at least one alkaline or alkaline-earth metal, selected from lithium, sodium, potassium , rubidium, magnesium and calcium,
- x represents an integer from 1 to 20,
- G represents at least one element of group 14 of the periodic classification of elements, selected from silicon, germanium, tin and lead,
- y represents an integer from 1 to 17,
- M represents at least a noble or semi-noble metal, selected from aluminium, cobalt, nickel, copper, zinc and silver, and
- z represents 0 or an integer from 1 to 5,
extracting A, at least partially, from the starting compound by thermal degradation under vacuum, or by reacting with an oxidizing solvent, provided that, in case of a thermal degradation under vacuum, z is different from 0, and
➢ collecting the material impoverished in A or devoid of A.

2. Method for preparing a material according to claim 1, **characterized in that** in the material of formula (I), G is a mixture of silicon and tin.

3. Method for preparing a material comprising at least one element of group 14 according to claim 1, comprising at least one step of thermal degradation under vacuum of a compound of formula (II) :
AxGyMz
in which :
- A represents an alkaline metal, selected from lithium, sodium and potassium,
- x represents an integer from 1 to 20,
- G represents silicon,
- y represents an integer from 1 to 10,
- M represents a noble or semi-noble metal, selected from aluminium, cobalt, nickel, copper, zinc and silver, and
- z represents an integer from 1 to 5.

4. Method for preparing a material comprising at least one element of group 14 according to any of claims 1 to 3, **characterized in that** the material impoverished in A, has a formula (IV)
Ax'GyMz
in which :
- A, G and M are as defined according to any of claims 1 to 3,
- y and z are as defined according to any of claims 1 to 3, and
- x' is a number smaller than y/10.

5. Method according to any of claims 1 to 4, **characterized in that** the pressure is lower than or equal to 10⁻² Pa.

6. Method according to any of claims 1 to 5, **characterized in that** the thermal degradation is carried out at a temperature greater than or equal to 500°C.

7. Method according to any of claims 1 to 6, **characterized in that** the thermal degradation is carried out from 10 to 30 hours.

8. Method for preparing a material comprising at least one element of group 14 according to claim 1, comprising at least the following steps :
➢ putting into contact an oxidizing solvent, with a material of formula (III) :
AxGyMz
in which :
- A represents at least one alkaline or alkaline-earth metal, in particular selected from lithium, sodium, potassium, rubidium, magnesium and calcium,
- x represents an integer from 1 to 12,
- G represents at least one element of group 14, particularly selected from silicon, germanium, tin and lead, and
- y represents an integer from 1 to 17, and
- z is 0
➢ collecting the material impoverished in A or devoid of A.

9. Method for preparing a material comprising at least one element of group 14 according to claim 8, **characterized in that** the material impoverished in A, is of formula (IV)
Ax'GyMz
in which:
- A and G are as previously defined,
- y is as previously defined, and
- z is 0,
- x' is a number smaller than y/10.

10. Method according to any of claims 8 or 9, **characterized in that** the oxidizing solvent has the following two features:
- to bear at least one oxidizing moiety selected from alcohol, amide, thiol, carbonyl, carboxylic acid and phosphonic acid, and
- to have at least an alkyl, aryl or aralkyl group.

11. Method according to claim 10, **characterized in that** the alkyl, aryl or aralkyl groups are selected from:
- linear, branched or cyclic alkyl radicals such as ethyl, propyl, butyl, pentyl, hexyl, heptyl, octyl, nonyl, decyl, undecyl, dodecyl, tridecyl, tetradecyl, pentadecyl, hexadecyl, octadecyl, nonadecyl, and
- aryl and aralkyl radicals, eventually substituted by once or more by an alkyl, which alkyl is optionally substituted and/or whose chain is interrupted by one or several heteroatoms.

12. Method according to any of claims 8 to 11, **characterized in that** the material of formula (IV)
Ax'GyMz
as defined in claim 9, is submitted to a thermal treatment step.

13. Method according to claim 12, **characterized in that** the temperature of the thermal treatment is superior or equal to 300°C.

14. Material comprising at least one element of group 14 obtainable by a method as defined according to any of claims 1 to 13 and wherein the material is of formula (IV) Ax'GyMz wherein A, G, M and y are as defined in claim 1, z represents an integer from 1 to 5 and x' is a number smaller than y/10 or devoid of A, said material being in the form of nanoparticules of pure G and/or M.

15. Material according to claim 14, wherein said material is in the form of a dispersion of nanoparticles of G or M, dispersed in a matrix of M or G or wherein nanoparticles M are dispersed in a matrix of G or nanoparticles of G are dispersed in a matrix of M.

16. Material according to claim 14, wherein the material is (i) in the form of a nanocrystalline matrix with grains of G ranging from 2 to 100 nm or (ii) wherein the G is crystallized in a thermodynamically stable form and/or the nanoparticles of metal M have a size from 2 to 50 nm.

17. Use of a material according to claim 14 in the field of electrochemistry.

18. Use of a material according to claim 14 in the fields of photovoltaic and thermoelectricity.

19. Battery comprising a material according to claim 14.

20. Anode comprising a material according to claim 14.

21. Use of a material according to claim 14, to store and release, in a reversible manner, at least one alkaline and/or alkaline-earth metal.
